# EUROPEAN PATENT SPECIFICATION

(11) **EP 3 544 109 B1**
(45) Date of publication and mention of the grant of the patent: **03.07.2024**
(21) Application number: 17872846.5
(22) Date of filing: 25.05.2017
(51) Int. Cl.: H01M 10/0567, H01M 10/0525, C07F 9/6593

(54) **LITHIUM-ION BATTERY ELECTROLYTE AND LITHIUM-ION BATTERY**
LITHIUM-IONEN-BATTERIEELEKTROLYT UND LITHIUM-IONEN-BATTERIE
ÉLECTROLYTE DE BATTERIE AU LITHIUM-ION ET BATTERIE AU LITHIUM-ION

(30) Priority: 17.11.2016 CN 201611009970
(43) Date of publication of application: 25.09.2019
(60) Divisional application: 23198865.0
(73) Proprietor: Zhangjiagang Guotai-Huarong New Chemical Materials Co., Ltd, Suzhou, Jiangsu 215634 (CN)
(72) Inventor: CHEN, Xiaoqin, Suzhou Jiangsu 215634 (CN); GAN, ChaoLun, Suzhou Jiangsu 215634 (CN); DAI, JianCai, Suzhou Jiangsu 215634 (CN); YUE, Li, Suzhou Jiangsu 215634 (CN); CHEN, JunCai, Suzhou Jiangsu 215634 (CN); ZHANG, Li, Suzhou Jiangsu 215634 (CN); WANG, Feng, Suzhou Jiangsu 215634 (CN)
(74) Representative: De Vries & Metman
(86) International application number: PCT/CN2017/085814
(87) International publication number: WO 2018/090594

(56) References cited:
- CN-A- 102 569 890
- CN-A- 103 208 653
- CN-A- 103 208 653
- CN-A- 104 140 559
- CN-A- 105 047 994
- CN-A- 105 047 994
- CN-A- 106 532 117
- JP-A- 2007 080 651
- JP-A- 2009 158 460
- JP-A- 2009 158 460
- JP-A- 2012 169 250
- JP-A- 2016 162 523
- US-A1- 2015 221 987
- US-A1- 2015 221 987
- HUANG TAO ET AL: "(2-Chloro-4-methoxy)-phenoxy pentafluorocyclotriphosphazene as a safety additive for lithium-ion batteries", MATERIALS CHEMISTRY AND PHYSICS, vol. 196, 7 May 2017 (2017-05-07), pages 310-314, XP085047653, ISSN: 0254-0584, DOI: 10.1016/J.MATCHEMPHYS.2017.05.005

## Description

### Technical Field of the Invention

The present invention relates to the electrochemical technical field, and in particular to a lithium-ion battery electrolyte and a lithium-ion battery.

### Background of the Invention

Lithium-ion batteries are becoming more and more widely used in people's production and life, which makes its safety issue be a focus of attention. The safety issue is a major challenge for lithium-ion batteries. When a large current is charged and discharged and when the battery is overcharged, the heat accumulation inside the battery can easily lead to thermal runaway, and even cause the battery to burn and explode.

There are two main solutions on the aspect of the electrolyte: on the one hand, an overcharging additive is added, such that the overcharging additive is preferentially oxidized and polymerized and an insulating polymer film is formed on the positive electrode interface when the battery is overcharged, thereby blocking the current to flow inside the battery and preventing the battery from continuing to overcharge to avoid burning or exploding; on the other hand, the flame retardant is added to the electrolyte to make a low-flame point or non-combustible electrolyte, and burning or explosion of the battery is avoided as much as possible by the flame retardancy of the electrolyte when an unsafe event occurs. Currently used overcharging additives, mainly are BP (biphenyl) and CHB (cyclohexylbenzene), which have better overcharging performance, but are harmful to the cycle and high temperature performance of the battery.

Common flame retardant additives are phosphorus flame retardants, halogen flame retardants and composite flame retardant additives (such as fluorophosphazene). Trimethyl phosphate (TMP), tris-(2,2,2-trifluoroethyl)phosphite (TTFP), fluorinated phosphate ester such as tris-(2,2,2-trifluoroethyl)phosphate (TFP), di-(2,2,2-trifluoroethyl)-methyl phosphate (BMP), fluorinated cyclic carbonate, fluorophosphazene, etc. are all ideal flame retardant additives. However, the addition of the flame retardant additives has to reach a certain amount to achieve a flame retardant effect, and excessive addition of the flame retardant additives increases the viscosity of the electrolyte, lowers the electrical conductivity of the electrolyte, and affects the electrical properties of the battery, thereby hindering the application of the flame retardant additives in electrolytes.

US 2015/221987 A (Yawata et al.) describes an electrolytic solution for a non-aqueous secondary battery comprising an electrolyte, a phosphazene compound, and an aprotic solvent, wherein 20 to 90 vol. % of the aprotic solvent is composed of a halogen-containing compound having a carbonyl group and a halogen atom. The phosphazene compound of the electrolytic solution is represented by the following formula: 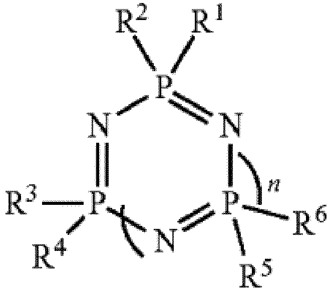 wherein: R¹ to R⁶ each independently represent a monovalent substituent; n represents an integer of 1 or more; and, in that case where n is 2 or more, R⁵ and R⁶ may be different from each other.

CN 105 047 994 A (Ningde Amperex Technology Ltd.) describes an electrolyte for a lithium ion battery comprising: a lithium salt; a solvent; and, an additive selected from phosphoric acid cyclic anhydride compounds and cyclophosphazene compounds. Said cyclophosphazenes are represented by the formula: 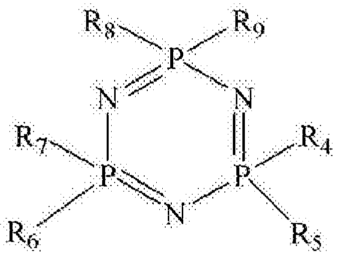 wherein: R⁴ to R⁹ are each independently selected from H, halogen, C₁-C₂₀ alkyl, C₂-C₂₀ alkenyl, C₆-C₂₀ aryl, C₁-C₂₀ alkoxy, C₆-C₂₀ aryloxy, C₁-C₂₀ halogenated alkyl, C₆-C₂₀ halogenated aryl, C₁-C₂₀ halogenated alkoxy and C₆-C₂₀ halogenated aryloxy; subject to the proviso that at least one of R⁴, R⁶ and R⁸ is an oxygen-containing group and at least two of R⁵, R⁷ and R⁹ are halogen.

JP2016162523A (Fujifilm Corporation) discloses an electrolytic solution for a non-aqueous secondary battery which contains: at least one additive selected from the group consisting of 6-membered cyclophosphazene compounds and 8-membered cyclophosphazene compounds; at least one cyclopropane compound; an electrolyte; and, a non-aqueous solvent.

### Summary of the Invention

The technical problem to be solved by the present invention is to design and synthesize a compound
having both flame retardant and overcharging functional groups, and when the compound is added to electrolyte, the electrolyte can prevent overcharging, has a flame retardant effect, and has good performance.

To achieve the above purpose, the technical solution employed by the present invention is as follows:
One purpose of the present invention is to provide an additive M having the following structural formula:

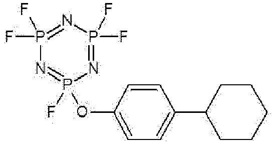

Firstly, this compound has a large amount of N, P, F, so that it has a good flame retardant effect; secondly, this compound has cyclohexylbenzene this and compound containing this functional group may polymerize when oxidized, and an electrolyte using the compound will be preferentially oxidized to form an insulating polymer preceding the normal electrolyte decomposition potential, and block the positive and negative electrodes for protection purposes when the battery is overcharged; thirdly, the compound may form a more stable SEI film on the surface of the electrode with other additives during the battery formation process, and avoid damage on the cycle performance and the high temperature performance from the commonly used overcharge additives and flame retardant additives.

Another purpose of the present invention is to provide a process for preparation of the additive M, which is to react compound 1 with compound 2 in the presence of an acid binding agent and an organic solvent at 80 - 100 °C to give the additive M, wherein the compound 1 is 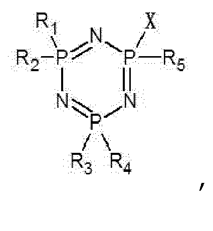 the compound 2 is 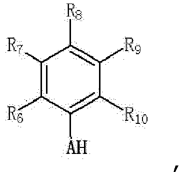 R1, R2, R3, wherein, R4 and R5 are F; R6, R7, R9 and R10 are hydrogen; A is O, R8 is cyclohexyl; and X is F.

Preferably, the acid binding agent is triethylamine, and the organic solvent is acetonitrile.

A third purpose of the present invention is to provide a lithium-ion battery electrolyte comprising a lithium salt, a solvent, and an additive.

Preferably, the additive M is added in an amount of 0.5 - 20% of the total mass of the electrolyte, further preferably 1 - 5%, more preferably 2 - 4%.

Preferably, the additive further contains 0.01 - 20% of other additives of a total mass of the electrolyte, and the other additives are selected from the group consisting of vinylene carbonate, 1,3-propane sultone, vinylethylene carbonate, propylene sulfate, trioctyl phosphate, and combinations thereof.

Preferably, the solvent contains a cyclic carbonate solvent and/or a chain carbonate solvent, and the cyclic carbonate solvent is selected from the group consisting of γ- butyrolactone (GBL), ethylene carbonate (EC), propylene carbonate (PC) and combinations thereof; the chain carbonate solvent is selected from the group consisting of dimethyl carbonate (DMC), ethyl methyl carbonate (EMC), diethyl carbonate (DEC), methyl propyl carbonate (MPC), methyl propionate (MP), ethyl propionate (EP), propyl propionate (PP), methyl acetate (MA), ethyl acetate (EA), propyl acetate (PA), methyl butyrate (MB), ethyl butyrate (EB), propyl butyrate (PB), and combinations thereof. Preferably, the lithium salt contains lithium hexafluorophosphate (LiPF6). Further preferably, a molar concentration of lithium hexafluorophosphate is 0.5 - 1.5 mol/L, more preferably 0.9 - 1.1 mol/L. Further preferably, the lithium salt further contains other lithium salts selected from the group consisting of lithium tetrafluoroborate (LiBF4), lithium hexafluoroarsenate(LiAsF6), anhydrous lithium perchlorate (LiClO4), and lithium bis(trifluoromethylsulfonyl)imide (LiN(SO2CF3)2), lithium trifluoromethanesulfonate (LiSO3CF3), lithium bis(oxalate)borate (LiC2O4BC2O4), lithium oxalyldifluoroborate (LiF2BC2O4), lithium bis(fluorosulfonyl)imide (LiN(SO2F)2), and combinations thereof.

A fourth purpose of the present invention is to provide a lithium-ion battery containing the above-mentioned lithium- ion battery electrolyte.

Due to the use of the above-mentioned technical solutions, the present invention has the following advantages over the prior art:
The additive M of the present invention has both flame retardant and overcharge functional groups, such that the electrolyte added with the additive M has a good flame retardant effect and a good overcharge prevention function, and has a little negative impact on battery performance.

### Brief Description of the Drawings

Fig. 1 is a MS spectrum of cyclohexylphenoxy(pentafluoro)tripolyphosphazene obtained in Preparation Example 1;
Fig. 2 is a GC spectrum of cyclohexylphenoxy(pentafluoro)tripolyphosphazene obtained in Preparation Example 1;
Fig. 3 is a TCD spectrum of cyclohexylphenoxy(pentafluoro)tripolyphosphazene obtained in Preparation Example 1;
Fig. 4 is a MS spectrum of tert-butylphenoxy(pentafluoro)tripolyphosphazene obtained in Preparation Example 4;
Fig. 5 is a GC spectrum of tert-butylphenoxy(pentafluoro)tripolyphosphazene obtained in Preparation Example 4;
Fig. 6 is a TCD spectrum of tert-butylphenoxy(pentafluoro)tripolyphosphazene obtained in Preparation Example 4
Fig. 7 is a graph showing test results of lithium cobalt oxide graphite batteries used in Embodiments 1 to 6, Comparative Example 1 and Comparative Example 2, wherein battery formation was formed by charging and discharging at 0.1 C and the batteries were performed 1 C normal temperature cycle;
Fig. 8 is a graph showing the oxidation potential of the electrolyte of Embodiment 7 tested by LCO/Li/Li three-electrode system;
Fig. 9 is a test graph of lithium cobalt oxide graphite batteries used in Embodiments 7 and 8 and Comparative Example 3, which were performed overcharging tests at constant current of 3C firstly and then at constant voltage of 10V;
Fig. 10 is a graph showing the oxidation potential of the electrolyte of Embodiment 8 tested by LMO/Li/Li three-electrode system;
Fig. 11 is a graph showing the oxidation potential of the electrolyte of Embodiment 9 tested by LMO/Li/Li three- electrode system;
Fig. 12 is a graph showing test results of lithium cobalt oxide graphite batteries used in Embodiments 10 to 12 and Comparative Example 4, which were performed by charging and discharging at 0.1 C and performed 1 C normal temperature cycle;
Fig. 13 is a test graph of lithium cobalt oxide graphite batteries used in Embodiment 13 and Comparative Example 4, which were performed overcharging test at constant current of 3C firstly and then at constant voltage of 10V;
Fig. 14 is a graph showing dQ/dV to V curve of the formation in Comparative Example 1, Comparative Example 2, and Embodiment 4.

### Detailed Description of Exemplary Embodiments

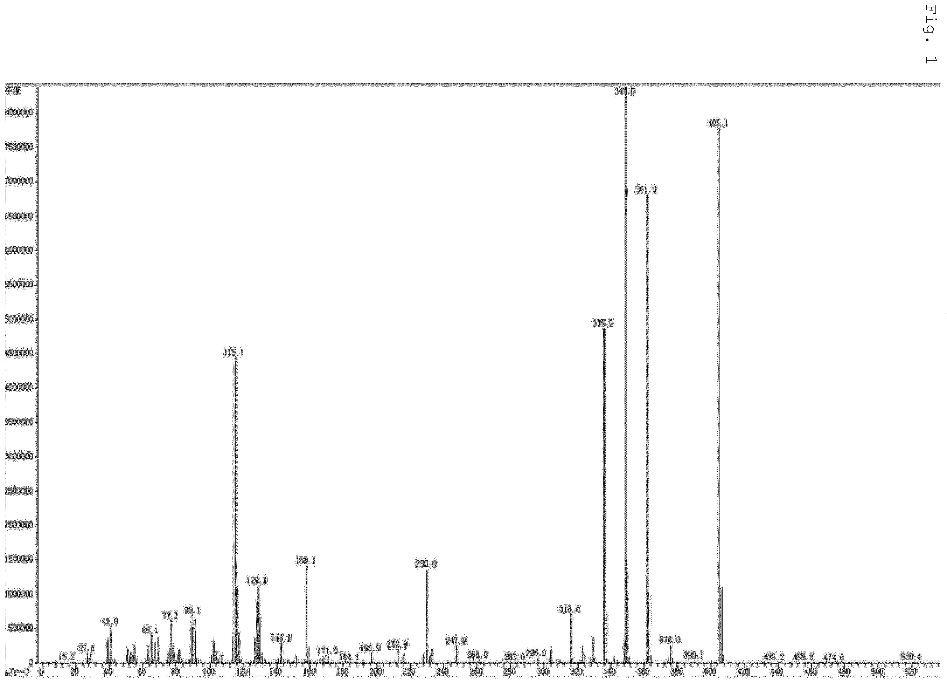

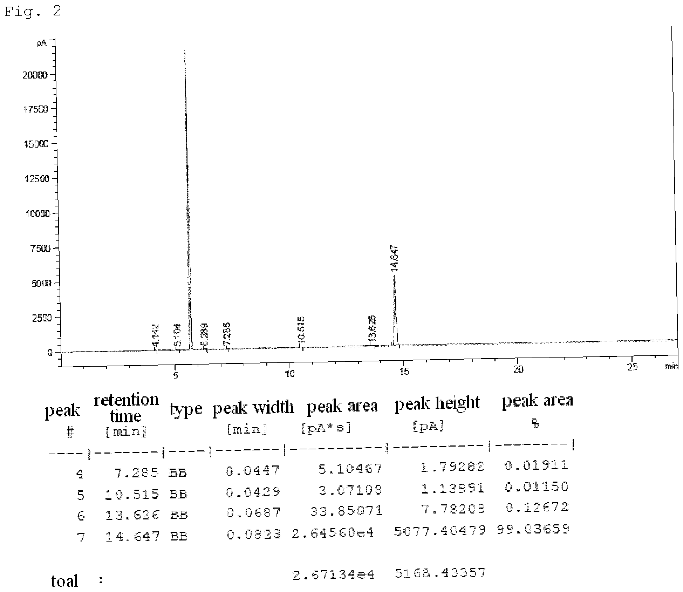

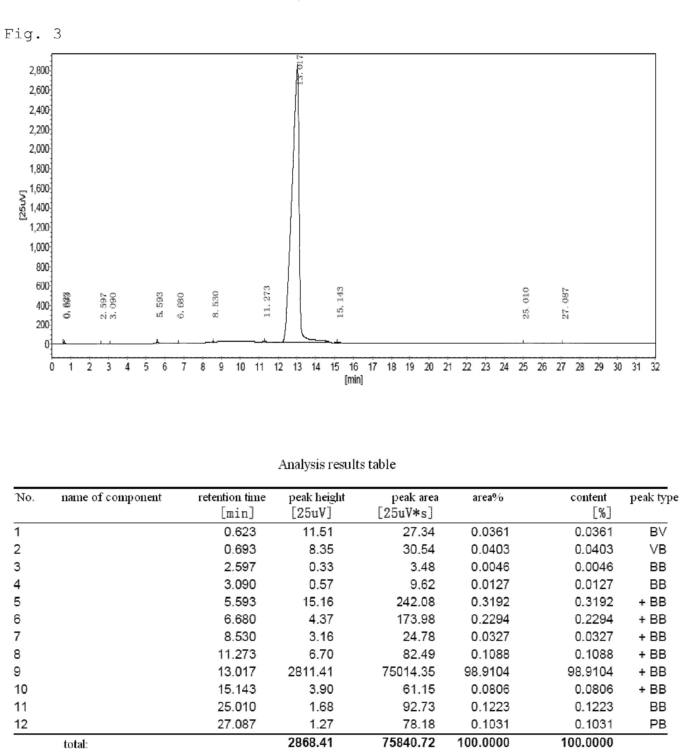

In the following, the present application is explained in detail combining with embodiments, but the present application is not limited to these embodiments. Preparation Example 1: Preparation of cyclohexylphenoxy(pentafluoro)tripolyphosphazene P-cyclohexylphenol and hexafluorocyclotriphosphazene used as raw material, triethylamine selected as the acid binding agent, and acetonitrile selected as the organic solvent, were feeded into a high-pressure autoclave at a time, and rapidly stirred, the temperature was raised to 90 °C, and the reaction was completed in 4 hours. The reaction solution was cooled to room temperature and filtered to give cyclohexylphenoxy(pentafluoro)tripolyphosphazene. The MS spectrum of cyclohexylphenoxy(pentafluoro)tripolyphosphazene is shown in Fig. 1, the GC spectrum is shown in Fig. 2, and the TCD spectrum is shown in Fig. 3.

The reaction equation is:

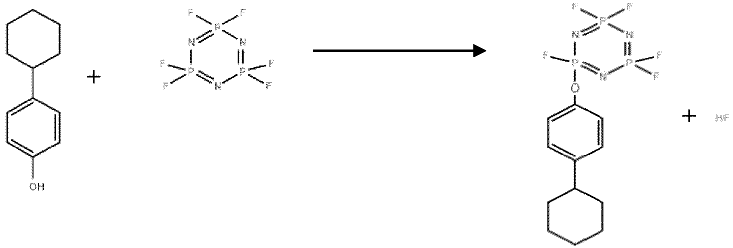

Preparation Example 2: Preparation of tert-butylphenoxy(pentafluoro)tripolyphosphazene. P-tert-butylphenol and hexafluorocyclotriphosphazene used as raw material, triethylamine selected as the acid binding agent, and acetonitrile selected as the organic solvent, were feeded into a high-pressure autoclave at a time, and rapidly stirred, the temperature was raised to 90 °C, and the reaction was completed in 4 hours. The reaction solution was cooled to room temperature and filtered to give tert-butylphenoxy(pentafluoro)tripolyphosphazene.

Preparation Example 3: Preparation of 3,4-difluorobiphenoxy(pentafluoro)tripolyphosphazene 3,4-difluorobiphenol and hexafluorocyclotriphosphazene used as raw material, triethylamine selected as the acid binding agent, and acetonitrile selected as the organic solvent, were feeded into a high-pressure autoclave at a time, and rapidly stirred, the temperature was raised to 90 °C, and the reaction was completed in 4 hours. The reaction solution was cooled to room temperature and filtered to give 3,4- difluorobiphenoxy(pentafluoro)tripolyphosphazene.

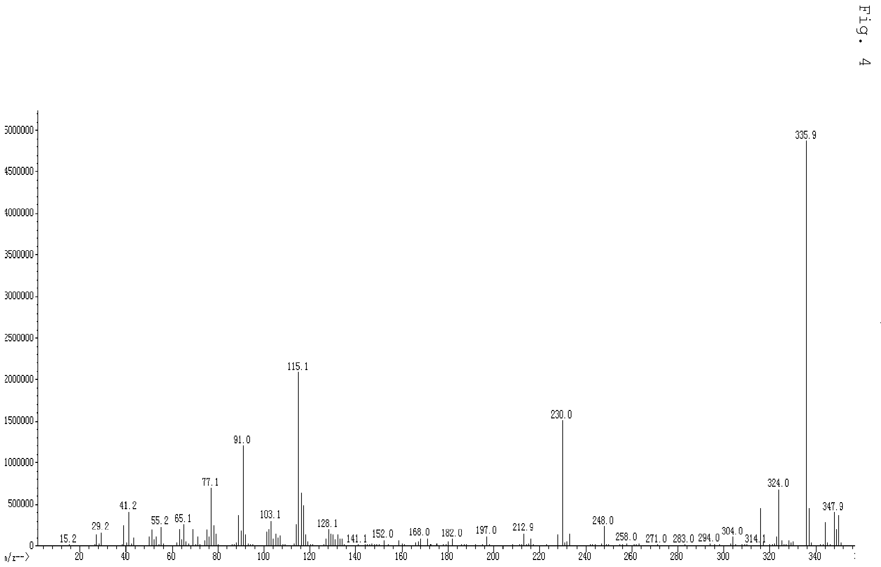

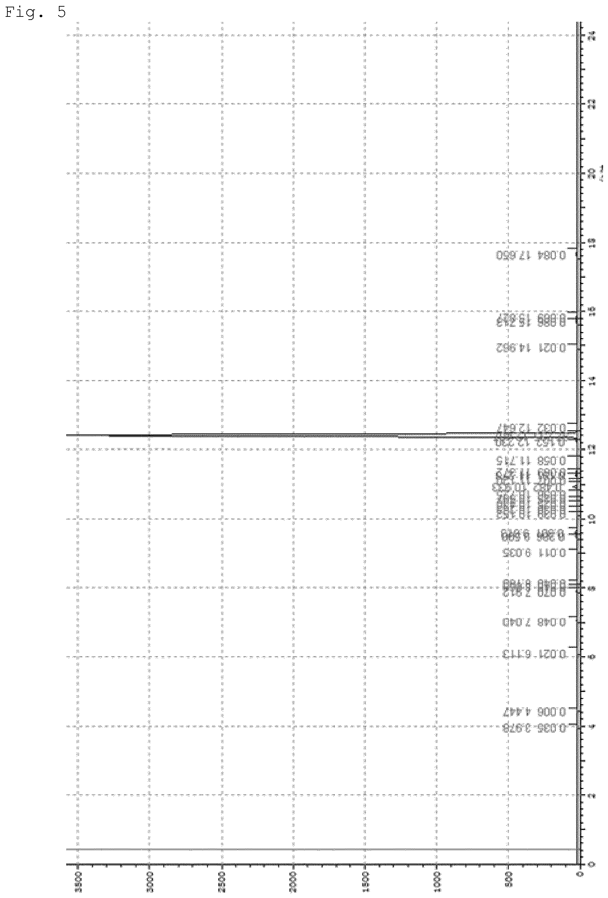

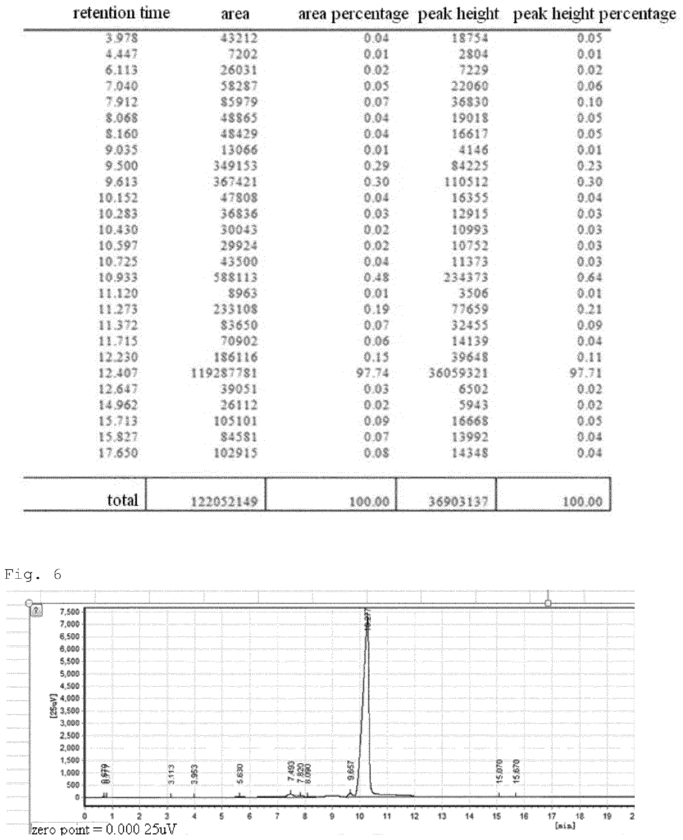

Preparation Example 4: Preparation of tert-pentylphenoxy(pentafluoro)tripolyphosphazene P-tert-amylphenol and hexafluorocyclotriphosphazene used as raw material, triethylamine selected as the acid binding agent, and acetonitrile selected as the organic solvent, were charged into a high-pressure autoclave at a time, and rapidly stirred, the temperature was raised to 90 °C, and the reaction was completed in 4 hours. The reaction solution was cooled to room temperature and filtered to give tert- pentylphenoxy(pentafluoro)tripolyphosphazene. The MS spectrum of tert-pentylphenoxy(pentafluoro)tripolyphosphazene is shown in Fig. 4, the GC spectrum is shown in Fig. 5, and the TCD spectrum is shown in Fig. 6.

### Embodiment 1:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and tert-butylphenoxy(pentafluoro)tripolyphosphazene obtained in Preparation Example 2 was added according to 1% of the total mass of the electrolyte, and the mixture was sufficiently stirred under room temperature to prepare and give a lithium-ion battery electrolyte.

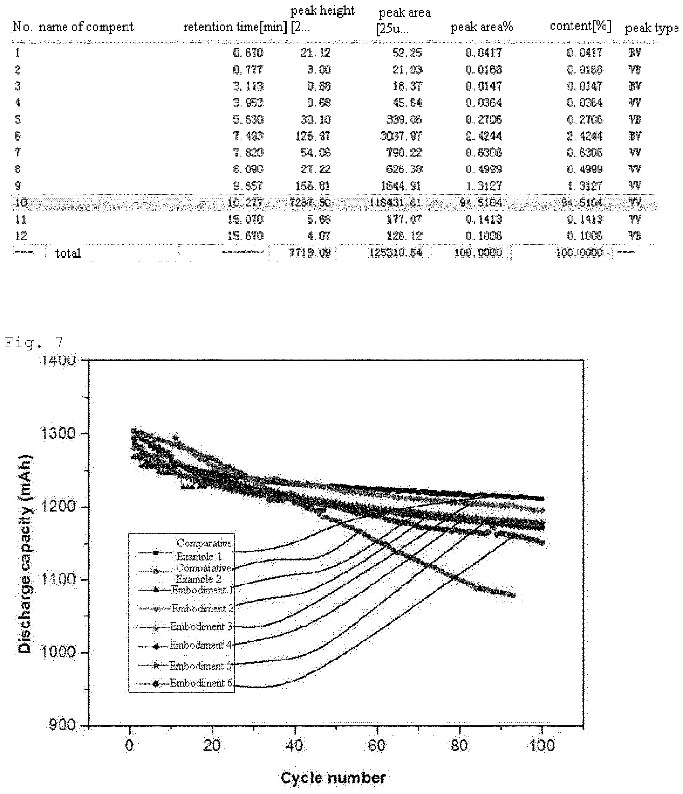

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C, and the batteries were performed 1 C normal temperature cycle, and the test results are shown in Fig. 7.

### Embodiment 2:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and tert-butylphenoxy(pentafluoro)tripolyphosphazene obtained in Preparation Example 2 was added according to 5% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in

Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Embodiment 3:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and cyclohexylphenoxy(pentafluoro)tripolyphosphazene obtained in Preparation Example 1 was added according to 1% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Embodiment 4:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and cyclohexylphenoxy(pentafluoro)tripolyphosphazene obtained in Preparation Example 1 was added according to 5% of the total mass of the electrolyte, and the mixture was sufficiently stirred under room temperature to prepare and give a lithium-ion battery electrolyte.

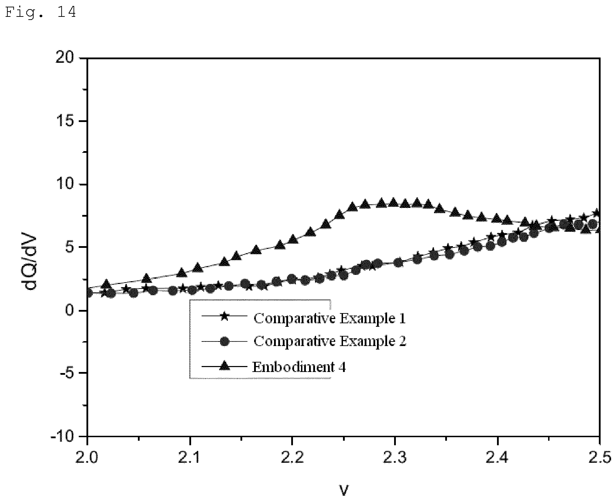

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7. The dQ/dV to V curve of the formation of the electrolyte is shown in Fig. 14.

### Embodiment 5:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and 3,4-difluorobiphenoxy(pentafluoro)tripolyphosphazene obtained in Preparation Example 3 was added according to 1% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Embodiment 6:

In an argon-filled glove box (H2O < 10 ppm), ethylene carbonate (EC), propylene carbonate (PC), and ethyl methyl carbonate (EMC) were uniformly mixed at a mass ratio of 1:1:2, then lithium hexafluorophosphate (LiPF6) having a concentration of 1 mol/L of lithium ion were added, and 3,4-difluorobiphenoxy(pentafluoro)tripolyphosphazene obtained in Preparation Example 3 was added according to 5% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7.

### Comparative Example 1:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and the mixture was sufficiently stirred under room temperature to prepare and give a lithium-ion battery electrolyte.

The burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and the batteries were formed by charging and discharging at 0.1 C and the batteries were performed 1 C normal temperature cycle, and the test results are shown in Fig. 7. The dQ/dV to V curve of the formation of the electrolyte is shown in Fig. 14.

### Comparative Example 2:

In an argon-filled glove box (H2O < 10 ppm), ethylene carbonate (EC), propylene carbonate (PC), and diethyl carbonate (DEC) were uniformly mixed at a mass ratio of 1:1:2, then lithium hexafluorophosphate (LiPF6) having a concentration of 1 mol/L of lithium ion were added, and p-cyclohexylphenol and ethoxy(pentafluoro)tripolyphosphazene was added according to 3% of the total mass of the electrolyte, respectively, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments 1 to 6 and Comparative Examples 1 and 2 of the present invention. Lithium cobalt oxide graphite batteries were used, and battery formation was formed by charging and discharging at 0.1 C and the batteries were performed 1 C normal temperature cycle, and the test results are shown in Fig. 7. The dQ/dV to V curve of the formation of the electrolyte is shown in Fig. 14.

### Comparative Example 3:

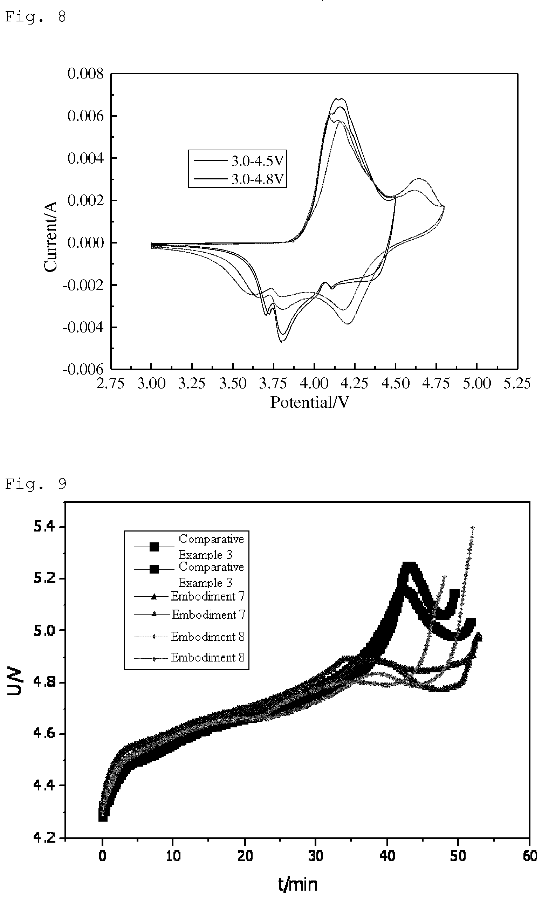

In an argon-filled glove box (H2O < 10 ppm), ethylene carbonate (EC), propylene carbonate (PC), and diethyl carbonate (DEC) were uniformly mixed at a mass ratio of 1:1:1, then lithium hexafluorophosphate (LiPF6) having a concentration of 1 mol/L of lithium ion were added, and the mixture was sufficiently stirred under room temperature to prepare and give a lithium-ion battery electrolyte. Lithium cobalt oxide graphite batteries were used, and were performed overcharging test at constant current firstly and then at constant voltage at 3C and 10V, the test curves are shown in Fig. 9.

### Embodiment 7:

In an argon-filled glove box (H2O < 10 ppm), ethylene carbonate (EC), propylene carbonate (PC), and diethyl carbonate (DEC) were uniformly mixed at a mass ratio of 1:1:1, then lithium hexafluorophosphate (LiPF6) having a concentration of 1 mol/L of lithium ion were added, and tert-butylphenoxy(pentafluoro)tripolyphosphazene obtained in Preparation Example 2 was added according to 3% of the total mass of the electrolyte, and the mixture was sufficiently stirred under room temperature to prepare and give a lithium-ion battery electrolyte.

The oxidation potential of the electrolyte was tested by LCO/Li/Li three-electrode system, and the test curves are shown in Fig. 8. Lithium cobalt oxide graphite batteries were used, and were performed overcharging test at constant current of 3C firstly and then at constant voltage of 10V,
the test curves are shown in Fig. 9.

As a result, the battery voltage in Comparative Example 3 rapidly increased, and the battery eventually exploded and ignited, while the battery in Embodiment 7 did not explode or ignite.

### Embodiment 8:

In an argon-filled glove box (H2O < 10 ppm), ethylene carbonate (EC), propylene carbonate (PC), and diethyl carbonate (DEC) were uniformly mixed at a mass ratio of 1:1:1, then lithium hexafluorophosphate (LiPF6) having a concentration of 1 mol/L of lithium ion were added, and cyclohexylphenoxy(pentafluoro)tripolyphosphazene obtained in Preparation Example 1 was added according to 3% of the total mass of the electrolyte, and the mixture was sufficiently stirred under room temperature to prepare and give a lithium-ion battery electrolyte.

Lithium cobalt oxide graphite batteries were used, and were performed overcharging test at constant current of 3C firstly and then at constant voltage of 10V, the test curves are shown in Fig. 9.

As a result, the battery voltage in Comparative Example 3 rapidly increased, and the battery eventually exploded and ignited, while the battery in Embodiment 8 did not explode or ignite.

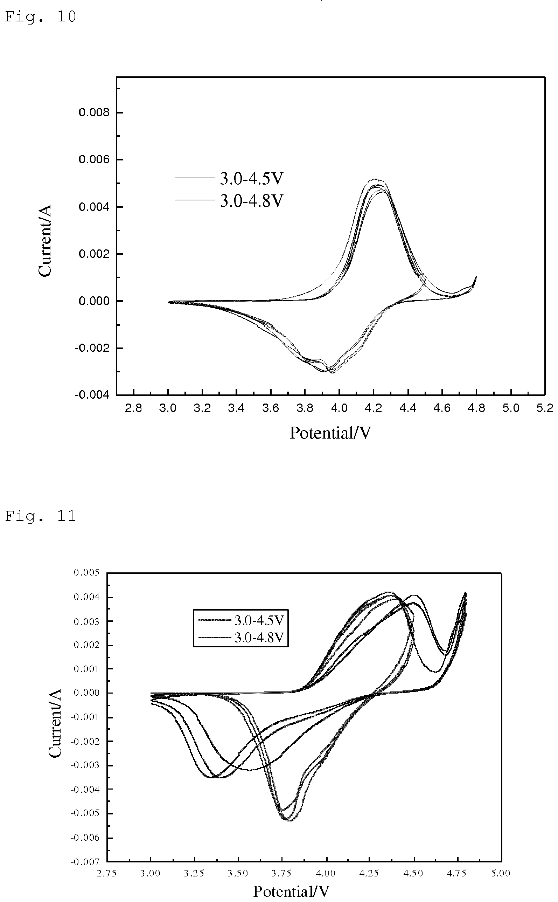

The oxidation potential of the electrolyte was tested by LMO/Li/Li three-electrode system, and the test curves are shown in Fig. 10.

### Embodiment 9:

In an argon-filled glove box (H2O < 10 ppm), ethylene carbonate (EC), propylene carbonate (PC), and diethyl carbonate (DEC) were uniformly mixed at a mass ratio of 1:1:1, then lithium hexafluorophosphate (LiPF6) having a concentration of 1 mol/L of lithium ion were added, and 3,4- difluorobiphenoxy(pentafluoro)tripolyphosphazene obtained in Preparation Example 3 was added according to 3% of the total mass of the electrolyte, and the mixture was sufficiently stirred under room temperature to prepare and give a lithium-ion battery electrolyte.

The oxidation potential of the electrolyte was tested by LMO/Li/Li three-electrode system, and the test curves are shown in Fig. 11.

### Embodiment 10:

In an argon-filled glove box (H2O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF6) having a concentration of 1 mol/L of lithium ion were added, and tert-pentylphenoxy(pentafluoro)tripolyphosphazene obtained in Preparation Example 4 was added according to 1% of the total mass of the electrolyte, and the mixture was sufficiently stirred under room temperature to prepare and give a lithium-ion battery electrolyte.

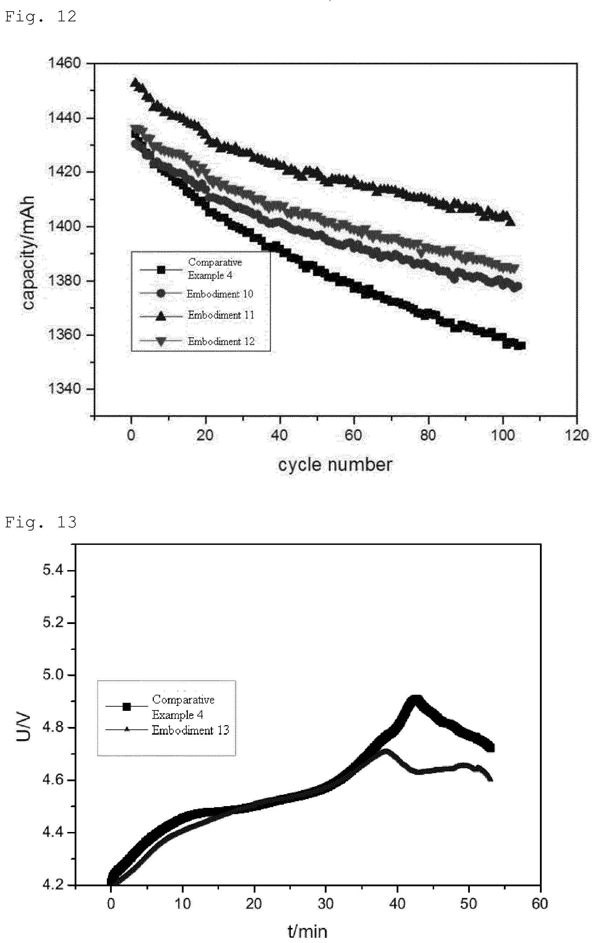

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

### Embodiment 11:

In an argon-filled glove box (H2O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF6) having a concentration of 1 mol/L of lithium ion were added, and tert-pentylphenoxy(pentafluoro)tripolyphosphazene obtained in Preparation Example 4 was added according to 3% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

### Embodiment 12:

In an argon-filled glove box (H2O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF6) having a concentration of 1 mol/L of lithium ion were added, and tert-pentylphenoxy(pentafluoro)tripolyphosphazene obtained in Preparation Example 4 was added according to 5% of the total mass of the electrolyte, and the mixture was sufficiently stirred under room temperature to prepare and give a lithium-ion battery electrolyte.

The compatibility of the above additives with solvents and salts was observed, and the burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

Lithium cobalt oxide graphite batteries were used, and were performed overcharging test at constant current of 3C firstly and then at constant voltage of 10V, the test curves are shown in Fig. 13.

As a result, the battery voltage in following Comparative Example 4 rapidly increased, and the battery eventually exploded and ignited, while the battery in Embodiment 12 did not explode or ignite.

### Comparative Example 4:

In an argon-filled glove box (H2O < 10 ppm), ethylene carbonate (EC), ethyl methyl carbonate (EMC), and dimethyl carbonate (DMC) were uniformly mixed at a mass ratio of 1:1:1, then lithium hexafluorophosphate (LiPF6) having a concentration of 1 mol/L of lithium ion were added, and the mixture was sufficiently stirred under room temperature to prepare and give a lithium-ion battery electrolyte.

The burning time per gram and the electrical conductivity were recorded, and the results are shown in Table 1. Table 1 shows the performance test results of the lithium ion battery electrolytes prepared in Embodiments and Comparative Examples of the present invention. Lithium cobalt oxide graphite batteries were used, and battery formation was formed by charging and discharging at 0.1 C and the batteries were performed 1 C normal temperature cycle, and the test results are shown in Fig. 12.

Lithium cobalt oxide graphite batteries were used, and were performed overcharging test at constant current of 3C firstly and then at constant voltage charging of 10V, the test curves are shown in Fig. 13.

**Table 1**

| | Compatibilit y | Electrical | Burning |
|---|---|---|---|
| | | Conductivity (ms/cm) | Time Per Gram (s) |
| Comparative Example 1 | Uniform | 6.91 | 71.53 |
| Comparative Example 2 | Uniform | 6.35 | 25.12 |
| Embodiment 1 | Uniform | 6.75 | 59.78 |
| Embodiment 2 | Uniform | 6.15 | 5.86 |
| Embodiment 3 | Uniform | 6.69 | 40.68 |
| Embodiment 4 | Uniform | 6.02 | 2.10 |
| Embodiment 5 | Uniform | 6.70 | 30.15 |
| Embodiment 6 | Uniform | 6.01 | 0.95 |
| Comparative Example 4 | Uniform | 10.38 | 116.2 |
| Embodiment 10 | Uniform | 10.25 | 82.2 |
| Embodiment 11 | Uniform | 10.09 | 72.6 |
| Embodiment 12 | Uniform | 9.91 | 69.1 |

The embodiments described above are only for illustrating the technical concepts and features of the present invention, and are intended to make those skilled in the art being able to understand the present invention and thereby implement it, and should not be concluded to limit the protective scope of this invention.

## Claims

1. An additive M having the structural formula:

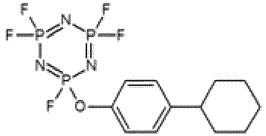

2. A process for preparation of the additive M as defined in claim 1, said process comprising reacting compound 1 with compound 2 in the presence of an acid binding agent and an organic solvent at 80 - 100°C, wherein the compound 1 is 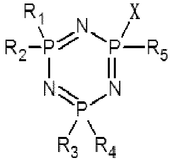 and the compound 2 is 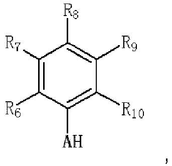 wherein
R₁, R₂, R₃, R₄ and R₅ are each F;
A is O;
R₆, R₇, R₉ and R₁₀ are each hydrogen;
Rs is cyclohexyl; and
X is F.

3. The process according to claim 2, wherein the acid binding agent is triethylamine.

4. The process according to claim 2 or claim 3, wherein the organic solvent is acetonitrile.

5. A lithium-ion battery electrolyte comprising:
a lithium salt;
a solvent; and,
an additive,
**characterized in that** the additive contains the additive M as defined in claim 1.

6. The lithium-ion battery electrolyte according to claim 5, wherein the additive M is added in an amount of 0.5 - 20% of the total mass of the electrolyte, preferably 1 - 5%, more preferably 2 - 4%.

7. The lithium-ion battery electrolyte according to claim 5 or claim 6, wherein
the additive further contains 0.01 - 20% based on the total mass of the electrolyte, of other additives and said other additives are selected from the group consisting of vinylene carbonate, 1,3-propane sultone, vinylethylene carbonate, propylene sulfate, trioctyl phosphate and combinations thereof.

8. The lithium-ion battery electrolyte according to any one of claims 5 to 7, wherein the solvent contains a cyclic carbonate solvent and / or a chain carbonate solvent,
said cyclic carbonate solvent being selected from the group consisting of γ-butyrolactone, ethylene carbonate, propylene carbonate and combinations thereof; and,
said chain carbonate solvent being selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate and combinations thereof.

9. The lithium-ion battery electrolyte according to any one of claims 5 to 8, wherein the lithium salt contains lithium hexafluorohosphate.

10. A lithium-ion battery comprising the lithium-ion battery electrolyte according to any one of claims 5 to 9.

## Patentansprüche

1. Zusatzstoff M, der die Strukturformel: 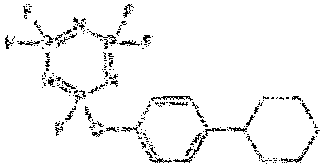 hat.

2. Verfahren zum Herstellen des Zusatzstoffs M, wie in Anspruch 1 definiert, wobei besagtes Verfahren ein Reagieren von Verbindung 1 mit Verbindung 2 in Anwesenheit eines SäureBindemittels und eines organischen Lösemittels bei 80 - 100 °C aufweist, wobei die Verbindung 1 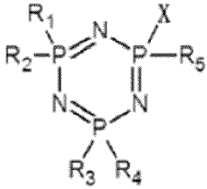 ist und die Verbindung 2 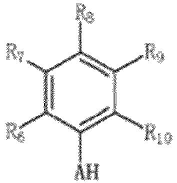 ist, wobei
R₁, R₂, R₃; R₄ und R₅ jeweils F sind,
A O ist,
R₆, R₇, R₉ und R₁₀ jeweils Wasserstoff sind,
R₈ Cyclohexyl ist und
X F ist.

3. Verfahren gemäß Anspruch 2, wobei das Säure-Bindemittel Triethylamin ist.

4. Verfahren gemäß Anspruch 2 oder Anspruch 3, wobei das organische Lösemittel Acetonitril ist.

5. Lithium-Ionen-Batterie-Elektrolyt, der aufweist:
ein Lithium-Salz,
ein Lösemittel und
einen Zusatzstoff,
**dadurch gekennzeichnet, dass** der Zusatzstoff den Zusatzstoff M, wie in Anspruch 1 definiert, enthält.

6. Lithium-Ionen-Batterie-Elektrolyt gemäß Anspruch 5, wobei der Zusatzstoff M in einer Menge von 0,5 - 20% der gesamten Masse des Elektrolyten zugesetzt ist, vorzugsweise 1 - 5%, noch bevorzugter 2 - 4%.

7. Lithium-Ionen-Batterie-Elektrolyt gemäß Anspruch 5 oder Anspruch 6, wobei
der Zusatzstoff ferner 0,01 - 20% basierend auf der gesamten Masse des Elektrolyten von anderen Zusatzstoffen enthält und besagte andere Zusatzstoffe ausgewählt sind aus der Gruppe bestehend aus Vinylencarbonat, 1,3-Propansulton, Vinylethylencarbonat, Propylensulfat, Trioctylphosphat und Kombinationen davon.

8. Lithium-Ionen-Batterie-Elektrolyt gemäß irgendeinem der Ansprüche 5 bis 7, wobei das Lösemittel ein Cyclisches-Carbonat-Lösemittel und/oder ein Ketten-Carbonat-Lösemittel enthält,
wobei besagtes Cyclisches-Carbonat-Lösemittel ausgewählt ist aus der Gruppe bestehend aus γ-Butyrolacton, Ethylencarbonat, Propylencarbonat und Kombinationen davon und
wobei besagtes Ketten-Carbonat-Lösemittel ausgewählt ist aus der Gruppe bestehend aus Dimethylcarbonat, Ethylmetylcarbonat, Diethylcarbonat, Methylpropylcarbonat, Methylpropionat, Ethylpropionat, Propylproprionat, Methylacetat, Ethylacetat, Propylacetat, Methylbutyrat, Ethylbutyrat, Propylbutyrat und Kombinationen davon.

9. Lithium-Ionen-Batterie-Elektrolyt gemäß irgendeinem der Ansprüche 5 bis 8, wobei das Lithium-Salz Lithiumhexafluorophosphat enthält.

10. Lithium-Ionen-Batterie, die den Lithium-Ionen-Batterie-Elektrolyt gemäß irgendeinem der Ansprüche 5 bis 9 aufweist.

## Revendications

1. Additif M ayant la formule structurale :

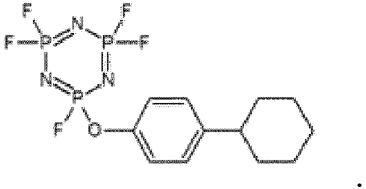

2. Procédé de préparation de l'additif M selon la revendication 1, ledit procédé comprenant la réaction du composé 1 avec le composé 2 en présence d'un agent de liaison acide et d'un solvant organique à 80 à 100 °C, dans lequel le composé 1 est 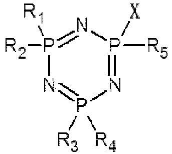 et le composé 2 est 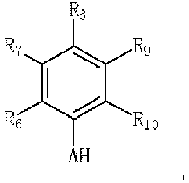 dans lequel
R₁, R₂, R₃, R₄ et R₅ sont chacun F ;
A est O ;
R₆, R₇, R₉ et R₁₀ sont chacun hydrogène ;
R₈ est cyclohexyle ; et
X est F.

3. Procédé selon la revendication 2, dans lequel l'agent de liaison acide est la triéthylamine.

4. Procédé selon la revendication 2 ou la revendication 3, dans lequel le solvant organique est l'acétonitrile.

5. Électrolyte de batterie lithium-ion comprenant :
un sel de lithium ;
un solvant ; et
un additif,
**caractérisé en ce que** l'additif contient l'additif M selon la revendication 1.

6. Électrolyte de batterie lithium-ion selon la revendication 5, dans lequel l'additif M est ajouté en une quantité de 0,5 à 20 % de la masse totale de l'électrolyte, de préférence de 1 à 5 %, mieux encore de 2 à 4 %.

7. Électrolyte de batterie lithium-ion selon la revendication 5 ou la revendication 6, dans lequel l'additif contient en outre 0,01 à 20 %, rapportés à la masse totale de l'électrolyte, d'autres additifs, et lesdits autres additifs sont choisis dans le groupe constitué du carbonate de vinylène, de la 1,3-propane sultone, du carbonate de vinyléthylène, du sulfate de propylène, du phosphate de trioctyle et de combinaisons de ceux-ci.

8. Électrolyte de batterie lithium-ion selon l'une quelconque des revendications 5 à 7, dans lequel le solvant contient un solvant carbonate cyclique et/ou un solvant carbonate à chaîne,
ledit solvant carbonate cyclique étant choisi dans le groupe constitué de la γ-butyrolactone, du carbonate d'éthylène, du carbonate de propylène et de combinaisons de ceux-ci ; et
ledit solvant carbonate à chaîne étant choisi dans le groupe constitué du carbonate de diméthyle, du carbonate d'éthylméthyle, du carbonate de diéthyle, du carbonate de méthylpropyle, du propionate de méthyle, du propionate d'éthyle, du propionate de propyle, de l'acétate de méthyle, de l'acétate d'éthyle, de l'acétate de propyle, du butyrate de méthyle, du butyrate d'éthyle, du butyrate de propyle et de combinaisons de ceux-ci.

9. Électrolyte de batterie lithium-ion selon l'une quelconque des revendications 5 à 8, dans lequel le sel de lithium contient de l'hexafluorophosphate de lithium.

10. Batterie lithium-ion comprenant l'électrolyte de batterie lithium-ion selon l'une quelconque des revendications 5 à 9.
